# EUROPÄISCHE PATENTSCHRIFT

(11) **EP 4 308 437 B1**
(45) Veröffentlichungstag und Bekanntmachung des Hinweises auf die Patenterteilung: **03.12.2025**
(21) Anmeldenummer: 22706628.9
(22) Anmeldetag: 21.02.2022
(51) Int. Cl.: B62D 21/18, B62D 63/02, B62D 7/04, B62D 9/00, B62D 11/20

(54) **FAHRWERK FÜR EIN MOBILES TRANSPORTSYSTEM UND MOBILES TRANSPORTSYSTEM**
CHASSIS FOR A MOBILE TRANSPORT SYSTEM, AND MOBILE TRANSPORT SYSTEM
CHÂSSIS POUR UN SYSTÈME DE TRANSPORT MOBILE ET SYSTÈME DE TRANSPORT MOBILE

(30) Priorität: 16.03.2021 DE 102021001371
(43) Veröffentlichungstag der Anmeldung: 24.01.2024
(73) Patentinhaber: SEW-EURODRIVE GmbH & Co. KG, 76646 Bruchsal (DE)
(72) Erfinder: SCHÖPFER, Claus, 69168 Wiesloch (DE); SCHIFFMANN, Sebastian, 76709 Kronau (DE); HAHN-WOERNLE, Paul, 70193 Stuttgart (DE); SIEBEL, Johannes, 67117 Limburgerhof (DE)
(86) Internationale Anmeldenummer: PCT/EP2022/054249
(87) Internationale Veröffentlichungsnummer: WO 2022/194491

(56) Entgegenhaltungen:
- WO-A1-2021/013970
- CN-U- 209 870 598
- DE-A1- 102012 025 152
- DE-A1- 102013 019 726
- DE-A1- 102017 221 375

## Beschreibung

Die Erfindung betrifft ein Fahrwerk für ein mobiles Transportsystem, welches einen Fahrzeugrahmen und mindestens vier Radmodule, welche jeweils mindestens ein Rad aufweisen, umfasst. Die Erfindung betrifft auch ein mobiles Transportsystem, insbesondere zum Transport von Gegenständen in einer technischen Anlage.

In technischen Anlagen, beispielsweise in Produktionswerken, werden mobile Transportsysteme, insbesondere autonom fahrende mobile Transportsysteme, zum Transport von Gegenständen, beispielsweise Kleinteilen oder Kisten eingesetzt. Die besagten mobilen Transportsysteme bringen unter anderem Bauteile von Logistikbereichen, wie beispielsweise einem Materiallager, zu Arbeitsplätzen, wo die Bauteile verarbeitet werden. Gattungsgemäße mobile Transportsysteme sind in der Lage, leichte Steigungen oder Gefälle sowie kleine Bodenschwellen oder ähnliche Hindernisse zu überwinden.

Aus dem Dokument DE 10 2013 019 726 A1 ist ein Fahrzeug bekannt, welches ein Gestell aufweist, an welchem mehrere Lenkeinheiten drehbar gelagert sind. Die Lenkeinheiten weisen jeweils ein Antriebsrad auf, dessen Radachse in einem Radachsträger drehbar gelagert ist, wobei der Radachsträger mittels einer Pendelachse drehbar gelagert ist.

Das Dokument DE 10 2012 025 152 A1 offenbart ein fahrerloses Transportsystem, welches an einem Tragteil angeordnete Lenkrollen und eine Antriebseinheit aufweist. Die Antriebseinheit weist ein von einem Elektromotor angetriebenes Rad auf und ist über einen Linearaktor relativ zu dem Tragteil bewegbar.

Aus der DE 10 2018 126 700 A1 ist ein Radantriebsmodul bekannt, welches ein Rad, ein Überlagerungsgetriebe und zwei Elektromotoren umfasst. Dabei sind die Elektromotoren dazu ausgebildet, das Rad gemeinsam mittels des Überlagerungsgetriebes um eine Radachse anzutreiben und um eine zu der Radachse orthogonale Lenkachse zu lenken.

Aus der DE 10 2017 221 375 A1 ist ein Flurförderfahrzeug bekannt, welches vier Räder, einem Fahrzeugrahmen und eine als Pendelachse ausgebildete Hinterachse aufweist. Dabei sind an dem Fahrzeugrahmen sowie an der Pendelachse jeweils zwei Räder angebracht.

Aus der DE 197 07 239 A1 ist ein Personen- und Gütertransportsystem bekannt. Das System umfasst ein Großmodul, welches eine Fahreinheit mit Rädern oder Rollen mit einem dreh- und schwenkbaren angetriebenen Rangierradsatz aufweist.

Aus der CN 209870598 U ist ein Transportfahrzeug mit einem Fahrwerk bekannt. Das Fahrwerk umfasst einen Fahrzeugrahmen und eine Pendelschwinge, welche relativ zu dem Fahrzeugrahmen schwenkbar ist. An dem Fahrzeugrahmen und an der Pendelschwinge sind jeweils zwei Radmodule angebracht.

Aus der WO 2021/013970 A1 ist ein fahrerloses Transportsystem bekannt, welches ein Chassis, Antriebsräder und Stützräder umfasst. Mit dem Chassis sind Pendelachsen schwenkbar verbunden. Die Antriebsräder und Stützräder sind an den Pendelachsen angeordnet.

Der Erfindung liegt die Aufgabe zugrunde, ein Fahrwerk für ein mobiles Transportsystem und ein mobiles Transportsystem, insbesondere zum Transport von Gegenständen in einer technischen Anlage, weiterzubilden.

Die Aufgabe wird durch ein Fahrwerk für ein mobiles Transportsystem mit den im Anspruch 1 angegebenen Merkmalen gelöst. Vorteilhafte Ausgestaltungen und Weiterbildungen sind Gegenstand der Unteransprüche. Die Aufgabe wird auch durch ein mobiles Transportsystem mit den im Anspruch 10 angegebenen Merkmalen gelöst.

Ein erfindungsgemäßes Fahrwerk für ein mobiles Transportsystem umfasst einen Fahrzeugrahmen und mindestens vier Radmodule, welche jeweils mindestens ein Rad aufweisen. Das Fahrwerk umfasst ferner eine Pendelschwinge, welche um eine in eine Längsrichtung verlaufende Pendelachse relativ zu dem Fahrzeugrahmen schwenkbar ist. Dabei sind mindestens zwei der Radmodule an dem Fahrzeugrahmen angebracht, und die Räder der besagten Radmodule sind jeweils um eine in eine Vertikalrichtung verlaufende Schwenkachse relativ zu dem Fahrzeugrahmen schwenkbar und um eine in eine horizontale Richtung verlaufende Drehachse relativ zu dem Fahrzeugrahmen drehbar gelagert. Ferner sind mindestens zwei der Radmodule an der Pendelschwinge angebracht, und die Räder der besagten Radmodule sind jeweils um eine in die Vertikalrichtung verlaufende Schwenkachse relativ zu der Pendelschwinge schwenkbar und um eine in eine horizontale Richtung verlaufende Drehachse relativ zu der Pendelschwinge drehbar gelagert.

Die Längsrichtung verläuft dabei rechtwinklig zu einer Querrichtung. Die Längsrichtung und die Querrichtung stellen horizontale Richtungen dar und verlaufen parallel zu einem Boden, auf welchem sich das Fahrwerk des mobilen Transportsystems befindet. Eine Vertikalrichtung steht senkrecht auf dem Boden und verläuft rechtwinklig zu der Längsrichtung und rechtwinklig zu der Querrichtung. Jede Richtung rechtwinklig zu der Vertikalrichtung stellt eine horizontale Richtung dar.

Das erfindungsgemäße Fahrwerk hat einen verhältnismäßig einfachen Aufbau und ist verhältnismäßig flach, also mit geringer Ausdehnung in der Vertikalrichtung, ausführbar. Auch bei Bodenunebenheiten bleiben stets alle Räder der Radmodule in Kontakt mit dem Boden, auf dem sich das Fahrwerk des mobilen Transportsystems befindet. Ferner weist das Fahrwerk eine sehr gute Lenkbarkeit auf und ist mit jeder Orientierung in jede horizontale Richtung bewegbar.

Erfindungsgemäß sind die mindestens vier Radmodule als Antriebsmodule ausgebildet, wobei jedes Antriebsmodul zwei Elektromotoren aufweist, mittels welchen das mindestens ein Rad des Antriebsmoduls um die in die Vertikalrichtung verlaufende Schwenkachse sowie um die in die horizontale Richtung verlaufende Drehachse antreibbar ist. Das Fahrwerk ist somit noch präziser und einfacher in jede horizontale Richtung lenkbar und mit jeder Orientierung in jede horizontale Richtung durch eigenen Antrieb bewegbar.

Erfindungsgemäß weist jedes Antriebsmodul ein Überlagerungsgetriebe auf, wobei die zwei Elektromotoren dazu ausgebildet sind, gemeinsam mittels des Überlagerungsgetriebes das Rad um die Drehachse anzutreiben und das Rad um die Schwenkachse anzutreiben. Das Überlagerungsgetriebe gestattet, die Drehungen der beiden Elektromotoren derart zu überlagern, dass ein Antrieb um die Drehachse zur Bewegung und ein Antrieb um die Schwenkachse zum Lenken ermöglicht sind. Dabei benötigt das Antriebsmodul keine bewegten Leitungen. Auch eine Schwenkung des Rades um die Schwenkachse um mehr als 360° ist damit ermöglicht.

Vorzugsweise sind dabei die Räder der an dem Fahrzeugrahmen angebrachten Radmodule, insbesondere deren Schwenkachsen, in der Querrichtung zueinander versetzt angeordnet.

Vorzugsweise sind ferner die Räder der an der Pendelschwinge angebrachten Radmodule, insbesondere deren Schwenkachsen, in der Querrichtung zueinander versetzt angeordnet. Bevorzugt weisen die Schwenkachsen der an dem Fahrzeugrahmen angebrachten Radmodule den gleichen Abstand in der Querrichtung zueinander auf wie die Schwenkachsen der an der Pendelschwinge angebrachten Radmodule. Die Räder, beziehungsweise deren Schwenkachsen, bilden also, in Vertikalrichtung gesehen, Eckpunkte eines Rechtecks.

Gemäß einer bevorzugten Ausgestaltung der Erfindung sind mindestens zwei der Radmodule als Antriebsmodule ausgebildet, wobei jedes Antriebsmodul zwei Elektromotoren aufweist, mittels welchen das mindestens ein Rad des Antriebsmoduls um die in die Vertikalrichtung verlaufende Schwenkachse sowie um die in die horizontale Richtung verlaufende Drehachse antreibbar ist. Das Fahrwerk ist somit in jede horizontale Richtung lenkbar und mit jeder Orientierung in jede horizontale Richtung durch eigenen Antrieb bewegbar.

Gemäß einer vorteilhaften Ausgestaltung der Erfindung ist mindestens eines der an dem Fahrzeugrahmen angebrachten Radmodule als Antriebsmodul ausgebildet, wobei jedes Antriebsmodul zwei Elektromotoren aufweist, mittels welchen das mindestens ein Rad des Antriebsmoduls um die in die Vertikalrichtung verlaufende Schwenkachse sowie um die in die horizontale Richtung verlaufende Drehachse antreibbar ist.

Gemäß einer vorteilhaften Ausgestaltung der Erfindung ist mindestens eines der an der Pendelschwinge angebrachten Radmodule als Antriebsmodul ausgebildet, wobei jedes Antriebsmodul zwei Elektromotoren aufweist, mittels welchen das mindestens ein Rad des Antriebsmoduls um die in die Vertikalrichtung verlaufende Schwenkachse sowie um die in die horizontale Richtung verlaufende Drehachse antreibbar ist.

Beispielsweise sind ein an dem Fahrzeugrahmen angebrachtes Radmodul und ein an der Pendelschwinge angebrachtes Radmodul als Antriebsmodule ausgebildet. Sofern die Räder, beziehungsweise deren Schwenkachsen, in Vertikalrichtung gesehen Eckpunkte eines Rechtecks bilden, sind die als Antriebsmodule ausgebildeten Radmodule vorzugsweise diagonal gegenüberliegend angeordnet.

Gemäß einer vorteilhaften Ausgestaltung der Erfindung schneiden sich in jedem Antriebsmodul die Drehachse und die Schwenkachse. Dadurch ist die Lenkbarkeit des Antriebsmoduls und damit des Fahrwerks vorteilhaft erhöht.

Gemäß einer vorteilhaften Ausgestaltung der Erfindung sind mindestens zwei der Radmodule als Stützmodule ausgebildet, wobei in jedem Stützmodul die Drehachse und die Schwenkachse beabstandet zueinander verlaufen, sich also nicht schneiden. Derartig ausgebildete Stützmodule sind verhältnismäßig kostengünstig und erleichtern ebenfalls Kurvenfahrten des Fahrwerks des mobilen Transportsystems.

Gemäß einer vorteilhaften Ausgestaltung der Erfindung weist das Fahrwerk genau vier Radmodule auf.

Gemäß einer vorteilhaften Ausgestaltung der Erfindung weist jedes der Radmodule jeweils genau ein Rad auf.

Ein erfindungsgemäßes mobiles Transportsystem, insbesondere zum Transport von Gegenständen in einer technischen Anlage, umfasst ein erfindungsgemäßes Fahrwerk. Das mobile Transportsystem ist insbesondere ein autonom fahrendes Fahrzeug. Das mobile Transportsystem umfasst ferner vorzugsweise einen elektrischen Energiespeicher, insbesondere eine aufladbare Batterie, zur Versorgung von Elektromotoren und weiteren Modulen.

Gemäß einer vorteilhaften Weiterbildung der Erfindung umfasst das mobile Transportsystem auch einen Übertragerkopf mit einer Wicklung, welche induktiv mit einem in einem Boden verlegten Primärleiter koppelbar ist. Somit ist Energie induktiv und damit berührungslos zu dem elektrischen Energiespeicher des mobilen Transportsystems übertragbar.

Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert. Die Erfindung ist nicht auf die in den Abbildungen dargestellten Ausführungsbeispiele beschränkt. Die Abbildungen stellen den Gegenstand der Erfindung nur schematisch dar. Es zeigen:
- Figur 1:: eine perspektivische Darstellung eines Fahrwerks gemäß einer ersten Ausführungsform,
- Figur 2:: eine weitere perspektivische Darstellung eines Fahrwerks gemäß einer ersten Ausführungsform,
- Figur 3:: eine perspektivische Darstellung eines Fahrwerks gemäß einer nicht beanspruchten Ausführungsform und
- Figur 4:: eine weitere perspektivische Darstellung eines Fahrwerks gemäß einer nicht beanspruchtenAusführungsform.

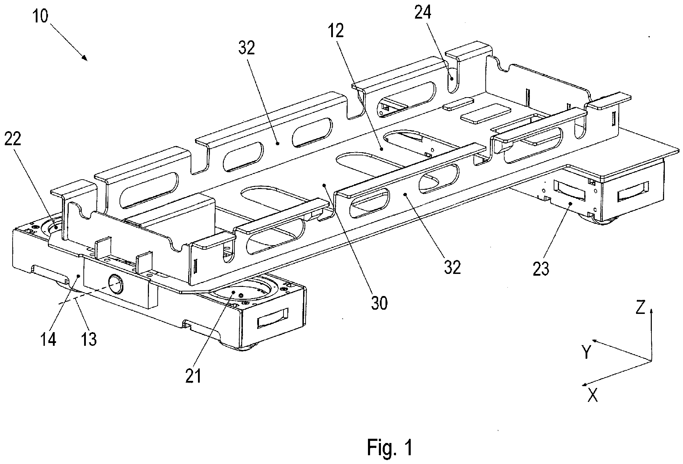

Figur 1 zeigt eine perspektivische Darstellung eines Fahrwerks 10 für ein mobiles Transportsystem gemäß einer ersten Ausführungsform. Das Fahrwerk 10 befindet sich auf einem Boden. Eine Vertikalrichtung Z steht senkrecht auf dem Boden und verläuft rechtwinklig zu einer Längsrichtung X und rechtwinklig zu einer Querrichtung Y. Die Längsrichtung X verläuft dabei rechtwinklig zu der Querrichtung Y. Jede Richtung rechtwinklig zu der Vertikalrichtung Z, insbesondere die Längsrichtung X und die Querrichtung Y, stellt eine horizontale Richtung dar und verläuft parallel zu dem Boden. In der hier gezeigten Darstellung ist eine obere, dem Boden abgewandte, Seite des Fahrwerks 10 sichtbar.

Das Fahrwerk 10 umfasst einen Fahrzeugrahmen 12. Der Fahrzeugrahmen 12 umfasst eine Grundplatte 30, die sich rechtwinklig zu der Vertikalrichtung Z erstreckt. Der Fahrzeugrahmen 12 umfasst ferner zwei Längsträger 32, die in der Querrichtung Y versetzt zueinander parallel in die Längsrichtung X verlaufen. Die Längsträger 32 sind mit der Grundplatte 30 starr verbunden, beispielsweise verschweißt.

Das Fahrwerk 10 umfasst auch eine Pendelschwinge 14. Die Pendelschwinge 14 ist um eine Pendelachse 13, die in die Längsrichtung X verläuft, relativ zu dem Fahrzeugrahmen 12 schwenkbar. An der Pendelschwinge 14 sind ein erstes Radmodul 21 und ein zweites Radmodul 22 angebracht. An dem Fahrzeugrahmen 12 sind ein drittes Radmodul 23 und ein viertes Radmodul 24 angebracht.

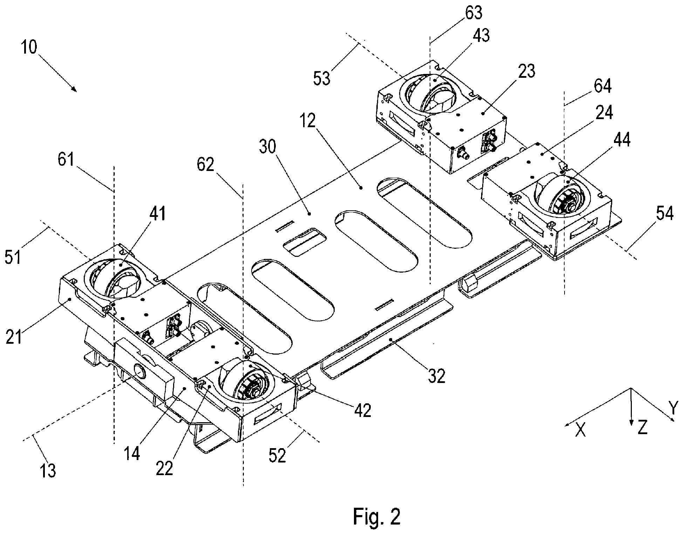

Figur 2 zeigt eine weitere perspektivische Darstellung des in Figur 1 dargestellten Fahrwerks 10 für ein mobiles Transportsystem gemäß der ersten Ausführungsform. In der hier gezeigten Darstellung ist eine untere, dem Boden zugewandte, Seite des Fahrwerks 10 sichtbar. Die Radmodule 21, 22, 23, 24 sind dabei jeweils als Antriebsmodul ausgebildet.

Das erste Radmodul 21 weist ein erstes Rad 41 auf. Das erste Rad 41 ist um eine in die Vertikalrichtung Z verlaufende erste Schwenkachse 61 relativ zu der Pendelschwinge 14 schwenkbar gelagert. Das erste Rad 41 ist auch um eine in eine horizontale Richtung verlaufende erste Drehachse 51 relativ zu der Pendelschwinge 14 drehbar gelagert.

Das zweite Radmodul 22 weist ein zweites Rad 42 auf. Das zweite Rad 42 ist um eine in die Vertikalrichtung Z verlaufende zweite Schwenkachse 62 relativ zu der Pendelschwinge 14 schwenkbar gelagert. Das zweite Rad 42 ist auch um eine in eine horizontale Richtung verlaufende zweite Drehachse 52 relativ zu der Pendelschwinge 14 drehbar gelagert.

Das dritte Radmodul 23 weist ein drittes Rad 43 auf. Das dritte Rad 43 ist um eine in die Vertikalrichtung Z verlaufende dritte Schwenkachse 63 relativ zu dem Fahrzeugrahmen 12 schwenkbar gelagert. Das dritte Rad 43 ist auch um eine in eine horizontale Richtung verlaufende dritte Drehachse 53 relativ zu dem Fahrzeugrahmen 12 drehbar gelagert.

Das vierte Radmodul 24 weist ein viertes Rad 44 auf. Das vierte Rad 44 ist um eine in die Vertikalrichtung Z verlaufende vierte Schwenkachse 64 relativ zu dem Fahrzeugrahmen 12 schwenkbar gelagert. Das vierte Rad 44 ist auch um eine in eine horizontale Richtung verlaufende vierte Drehachse 54 relativ zu dem Fahrzeugrahmen 12 drehbar gelagert.

Die Räder 41, 42, 43, 44 haben Kontakt mit dem Boden. Wenn der Boden Unebenheiten aufweist, so schwenkt die Pendelschwinge 14 um die Pendelachse 13 relativ zu dem Fahrzeugrahmen 12. In diesem Fall verlaufen die erste Schwenkachse 61 und die zweite Schwenkachse 62 leicht geneigt zu der Vertikalrichtung Z. Diese Neigung ist jedoch nur geringfügig; näherungsweise verlaufen die erste Schwenkachse 61 und die zweite Schwenkachse 62 auch in diesem Fall in die Vertikalrichtung Z.

In der hier gezeigten Darstellung verlaufen die Drehachsen 51, 52, 53, 54 in die Querrichtung Y. In Abhängigkeit von einer Schwenkung eines der Räder 41, 42, 43, 44 um die jeweilige Schwenkachse 61, 62, 63, 64 verläuft die jeweilige Drehachse 51, 52, 53, 54 beispielsweise in Längsrichtung X oder in eine andere horizontale Richtung.

Das erste Rad 41 und das zweite Rad 42 sind in der Querrichtung Y zueinander versetzt angeordnet. Insbesondere sind die erste Schwenkachse 61 und die zweite Schwenkachse 62 in der Querrichtung Y zueinander versetzt angeordnet. Das dritte Rad 43 und das vierte Rad 44 sind ebenfalls in der Querrichtung Y zueinander versetzt angeordnet. Insbesondere sind die dritte Schwenkachse 63 und die vierte Schwenkachse 64 in der Querrichtung Y zueinander versetzt angeordnet. Die Schwenkachsen 61, 62, 63, 64 bilden, in Vertikalrichtung Z gesehen, Eckpunkte eines Parallelogramms, insbesondere eines Rechtecks.

Jedes der als Antriebsmodul ausgebildeten Radmodule 21, 22, 23, 24 weist jeweils zwei Elektromotoren auf. Mittels der besagten Elektromotoren ist das Rad 41, 42, 43, 44 des jeweiligen Antriebsmoduls um die jeweilige Schwenkachse 61, 62, 63, 64 sowie um die jeweilige Drehachse 51, 52, 53, 54 antreibbar. Die jeweilige Schwenkachse 61, 62, 63, 64 und die jeweilige Drehachse 51, 52, 53, 54 eines als Antriebsmodul ausgebildeten Radmoduls 21, 22, 23, 24 schneiden sich.

Ferner weist jedes der als Antriebsmodul ausgebildeten Radmodule 21, 22, 23, 24 ein Überlagerungsgetriebe auf. Die besagten zwei Elektromotoren sind dazu ausgebildet, gemeinsam mittels des Überlagerungsgetriebes das jeweilige Rad 41, 42, 43, 44 des jeweiligen Antriebsmoduls um die jeweilige Drehachse 51, 52, 53, 54 anzutreiben und das jeweilige Rad 41, 42, 43, 44 um die jeweilige Schwenkachse 61, 62, 63, 64 anzutreiben.

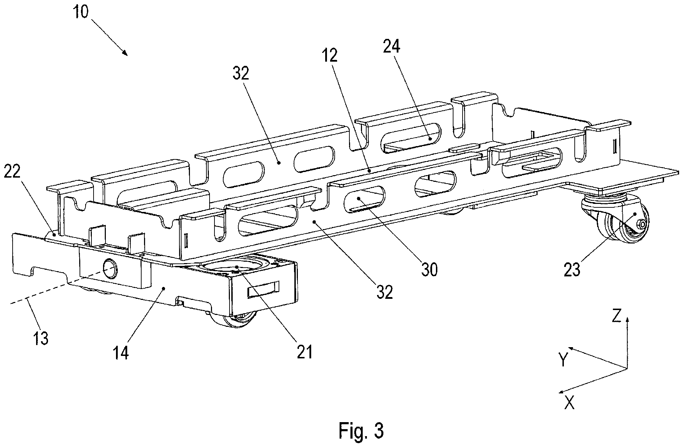

Figur 3 zeigt eine perspektivische Darstellung eines Fahrwerks 10 für ein mobiles Transportsystem gemäß einer nicht beanspruchten Ausführungsform. Das Fahrwerk 10 befindet sich auf einem Boden. Eine Vertikalrichtung Z steht senkrecht auf dem Boden und verläuft rechtwinklig zu einer Längsrichtung X und rechtwinklig zu einer Querrichtung Y. Die Längsrichtung X verläuft dabei rechtwinklig zu der Querrichtung Y. Jede Richtung rechtwinklig zu der Vertikalrichtung Z, insbesondere die Längsrichtung X und die Querrichtung Y, stellt eine horizontale Richtung dar und verläuft parallel zu dem Boden. In der hier gezeigten Darstellung ist eine obere, dem Boden abgewandte, Seite des Fahrwerks 10 sichtbar.

Das Fahrwerk 10 umfasst einen Fahrzeugrahmen 12. Der Fahrzeugrahmen 12 umfasst eine Grundplatte 30, die sich rechtwinklig zu der Vertikalrichtung Z erstreckt. Der Fahrzeugrahmen 12 umfasst ferner zwei Längsträger 32, die in der Querrichtung Y versetzt zueinander parallel in die Längsrichtung X verlaufen. Die Längsträger 32 sind mit der Grundplatte 30 starr verbunden, beispielsweise verschweißt.

Das Fahrwerk 10 umfasst auch eine Pendelschwinge 14. Die Pendelschwinge 14 ist um eine Pendelachse 13, die in die Längsrichtung X verläuft, relativ zu dem Fahrzeugrahmen 12 schwenkbar. An der Pendelschwinge 14 sind ein erstes Radmodul 21 und ein zweites Radmodul 22 angebracht. An dem Fahrzeugrahmen 12 sind ein drittes Radmodul 23 und ein viertes Radmodul 24 angebracht.

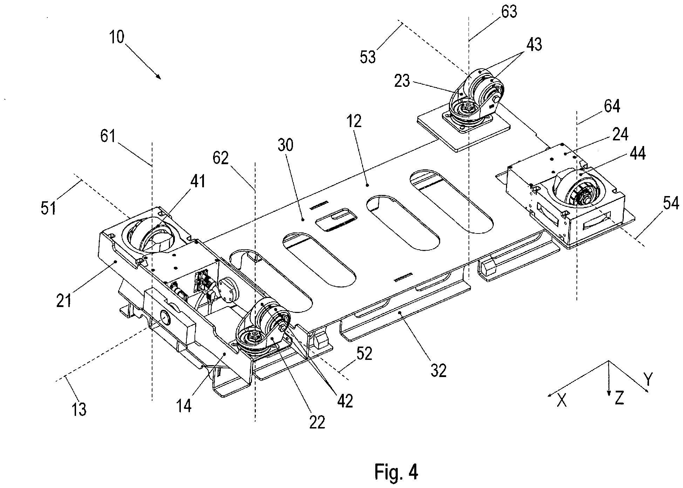

Figur 4 zeigt eine weitere perspektivische Darstellung des Fahrwerks 10 für ein mobiles Transportsystem gemäß der nicht beanspruchten Ausführungsform. In der hier gezeigten Darstellung ist eine untere, dem Boden zugewandte, Seite des Fahrwerks 10 sichtbar. Das erste Radmodul 21 und das vierte Radmodul 24 sind jeweils als Antriebsmodul ausgebildet. Das zweite Radmodul 22 und das dritte Radmodul 23 sind jeweils als Stützmodul ausgebildet.

Das erste Radmodul 21 weist ein erstes Rad 41 auf. Das erste Rad 41 ist um eine in die Vertikalrichtung Z verlaufende erste Schwenkachse 61 relativ zu der Pendelschwinge 14 schwenkbar gelagert. Das erste Rad 41 ist auch um eine in eine horizontale Richtung verlaufende erste Drehachse 51 relativ zu der Pendelschwinge 14 drehbar gelagert.

Das zweite Radmodul 22 weist zwei zweite Räder 42 auf. Die zweiten Räder 42 sind gemeinsam um eine in die Vertikalrichtung Z verlaufende zweite Schwenkachse 62 relativ zu der Pendelschwinge 14 schwenkbar gelagert. Die zweiten Räder 42 sind auch gemeinsam um eine in eine horizontale Richtung verlaufende zweite Drehachse 52 relativ zu der Pendelschwinge 14 drehbar gelagert.

Das dritte Radmodul 23 weist zwei dritte Räder 43 auf. Die dritten Räder 43 sind gemeinsam um eine in die Vertikalrichtung Z verlaufende dritte Schwenkachse 63 relativ zu dem Fahrzeugrahmen 12 schwenkbar gelagert. Die dritten Räder 43 sind auch gemeinsam um eine in eine horizontale Richtung verlaufende dritte Drehachse 53 relativ zu dem Fahrzeugrahmen 12 drehbar gelagert.

Das vierte Radmodul 24 weist ein viertes Rad 44 auf. Das vierte Rad 44 ist um eine in die Vertikalrichtung Z verlaufende vierte Schwenkachse 64 relativ zu dem Fahrzeugrahmen 12 schwenkbar gelagert. Das vierte Rad 44 ist auch um eine in eine horizontale Richtung verlaufende vierte Drehachse 54 relativ zu dem Fahrzeugrahmen 12 drehbar gelagert.

Die Räder 41, 42, 43, 44 haben Kontakt mit dem Boden. Wenn der Boden Unebenheiten aufweist, so schwenkt die Pendelschwinge 14 um die Pendelachse 13 relativ zu dem Fahrzeugrahmen 12. In diesem Fall verlaufen die erste Schwenkachse 61 und die zweite Schwenkachse 62 leicht geneigt zu der Vertikalrichtung Z. Diese Neigung ist jedoch nur geringfügig; näherungsweise verlaufen die erste Schwenkachse 61 und die zweite Schwenkachse 62 auch in diesem Fall in die Vertikalrichtung Z.

In der hier gezeigten Darstellung verlaufen die Drehachsen 51, 52, 53, 54 in die Querrichtung Y. In Abhängigkeit von einer Schwenkung eines der Räder 41, 42, 43, 44 um die jeweilige Schwenkachse 61, 62, 63, 64 verläuft die jeweilige Drehachse 51, 52, 53, 54 beispielsweise in Längsrichtung X oder in eine andere horizontale Richtung.

Das erste Rad 41 und die zweiten Räder 42 sind in der Querrichtung Y zueinander versetzt angeordnet. Insbesondere sind die erste Schwenkachse 61 und die zweite Schwenkachse 62 in der Querrichtung Y zueinander versetzt angeordnet. Die dritten Räder 43 und das vierte Rad 44 sind ebenfalls in der Querrichtung Y zueinander versetzt angeordnet. Insbesondere sind die dritte Schwenkachse 63 und die vierte Schwenkachse 64 in der Querrichtung Y zueinander versetzt angeordnet. Die Schwenkachsen 61, 62, 63, 64 bilden, in Vertikalrichtung Z gesehen, Eckpunkte eines Parallelogramms, insbesondere eines Rechtecks.

Jedes der als Antriebsmodul ausgebildeten Radmodule 21, 24 weist jeweils zwei Elektromotoren auf. Mittels der besagten Elektromotoren ist das Rad 41, 44 des jeweiligen Antriebsmoduls um die jeweilige Schwenkachse 61, 64 sowie um die jeweilige Drehachse 51, 54 antreibbar. Die jeweilige Schwenkachse 61, 64 und die jeweilige Drehachse 51, 54 eines als Antriebsmodul ausgebildeten Radmoduls 21, 24 schneiden sich.

Ferner weist jedes der als Antriebsmodul ausgebildeten Radmodule 21, 24 ein Überlagerungsgetriebe auf. Die besagten zwei Elektromotoren sind dazu ausgebildet, gemeinsam mittels des Überlagerungsgetriebes das jeweilige Rad 41, 44 des jeweiligen Antriebsmoduls um die jeweilige Drehachse 51, 54 anzutreiben und das jeweilige Rad 41, 44 um die jeweilige Schwenkachse 61, 64 anzutreiben.

Die als Stützmodul ausgebildeten Radmodule 22, 23 weisen keine Elektromotoren und kein Getriebe auf. Die Räder 42, 43 der Stützmodule sind um die jeweilige Drehachse 52, 53 frei drehbar gelagert. Die jeweilige Schwenkachse 62, 63 und die jeweilige Drehachse 52, 53 eines als Stützmodul ausgebildeten Radmoduls 22, 23 verlaufen beabstandet zueinander, schneiden sich also nicht.

### Bezugszeichenliste

- 10: Fahrwerk
- 12: Fahrzeugrahmen
- 13: Pendelachse
- 14: Pendelschwinge
- 21: erstes Radmodul
- 22: zweites Radmodul
- 23: drittes Radmodul
- 24: viertes Radmodul
- 30: Grundplatte
- 32: Längsträger
- 41: erstes Rad
- 42: zweites Rad
- 43: drittes Rad
- 44: viertes Rad
- 51: erste Drehachse
- 52: zweite Drehachse
- 53: dritte Drehachse
- 54: vierte Drehachse
- 61: erste Schwenkachse
- 62: zweite Schwenkachse
- 63: dritte Schwenkachse
- 64: vierte Schwenkachse
- X: Längsrichtung
- Y: Querrichtung
- Z: Vertikalrichtung

## Patentansprüche

1. Fahrwerk (10) für ein mobiles Transportsystem, umfassend
einen Fahrzeugrahmen (12) und
mindestens vier Radmodule (21, 22, 31, 32),
welche jeweils mindestens ein Rad (41, 42, 43, 44) aufweisen, wobei
das mobile Transportsystem (10)
eine Pendelschwinge (14) umfasst, welche um eine in eine Längsrichtung (X) verlaufende Pendelachse (13) relativ zu dem Fahrzeugrahmen (12) schwenkbar ist, wobei
mindestens zwei der Radmodule (21, 22, 31, 32)
an dem Fahrzeugrahmen (12) angebracht sind, und
die Räder (41, 42, 43, 44) der besagten Radmodule (21, 22, 31, 32)
jeweils um eine in eine Vertikalrichtung (Z) verlaufende Schwenkachse (61, 62, 63, 64) relativ zu dem Fahrzeugrahmen (12) schwenkbar und
um eine in eine horizontale Richtung verlaufende Drehachse (51, 52, 53, 54) relativ zu dem Fahrzeugrahmen (12) drehbar gelagert sind, und
mindestens zwei der Radmodule (21, 22, 31, 32)
an der Pendelschwinge (14) angebracht sind, und
die Räder (41, 42, 43, 44) der besagten Radmodule (21, 22, 31, 32)
jeweils um eine in die Vertikalrichtung (Z) verlaufende Schwenkachse (61, 62, 63, 64) relativ zu der Pendelschwinge (14) schwenkbar und
um eine in eine horizontale Richtung verlaufende Drehachse (51, 52, 53, 54) relativ zu der Pendelschwinge (14) drehbar gelagert sind,
**dadurch gekennzeichnet, dass**
die mindestens vier Radmodule (21, 22, 31, 32) als Antriebsmodule ausgebildet sind, wobei jedes Antriebsmodul zwei Elektromotoren aufweist, mittels welchen
das mindestens ein Rad (41, 42, 43, 44) des Antriebsmoduls
um die in die Vertikalrichtung (Z) verlaufende Schwenkachse (61, 62, 63, 64) sowie um die in die horizontale Richtung verlaufende Drehachse (51, 52, 53, 54) antreibbar ist, und dass
jedes Antriebsmodul ein Überlagerungsgetriebe aufweist, wobei
die zwei Elektromotoren dazu ausgebildet sind, gemeinsam mittels des Überlagerungsgetriebes das Rad (41, 42, 43, 44) um die Drehachse (51, 52, 53, 54) anzutreiben und
das Rad (41, 42, 43, 44) um die Schwenkachse (61, 62, 63, 64) anzutreiben.

2. Fahrwerk (10) nach Anspruch 1,
**dadurch gekennzeichnet, dass**
die Räder (41, 42, 43, 44) der an dem Fahrzeugrahmen (12) angebrachten Radmodule (21, 22, 31, 32) in einer Querrichtung (Y) zueinander versetzt angeordnet sind, und/oder dass
die Räder (41, 42, 43, 44) der an der Pendelschwinge (14) angebrachten Radmodule (21, 22, 31, 32) in einer Querrichtung (Y) zueinander versetzt angeordnet sind.

3. Fahrwerk (10) nach einem der vorangegangenen Ansprüche,
**dadurch gekennzeichnet, dass**
mindestens zwei der Radmodule (21, 22, 31, 32) als Antriebsmodule ausgebildet sind, wobei jedes Antriebsmodul zwei Elektromotoren aufweist, mittels welchen
das mindestens ein Rad (41, 42, 43, 44) des Antriebsmoduls
um die in die Vertikalrichtung (Z) verlaufende Schwenkachse (61, 62, 63, 64) sowie um die in die horizontale Richtung verlaufende Drehachse (51, 52, 53, 54) antreibbar ist.

4. Fahrwerk (10) nach einem der vorangegangenen Ansprüche,
**dadurch gekennzeichnet, dass**
mindestens eines der an dem Fahrzeugrahmen (12) angebrachten Radmodule (21, 22, 31, 32) als Antriebsmodul ausgebildet ist, wobei
jedes Antriebsmodul zwei Elektromotoren aufweist, mittels welchen
das mindestens ein Rad (41, 42, 43, 44) des Antriebsmoduls
um die in die Vertikalrichtung (Z) verlaufende Schwenkachse (61, 62, 63, 64) sowie
um die in die horizontale Richtung verlaufende Drehachse (51, 52, 53, 54) antreibbar ist.

5. Fahrwerk (10) nach einem der vorangegangenen Ansprüche,
**dadurch gekennzeichnet, dass**
mindestens eines der an der Pendelschwinge (14) angebrachten Radmodule (21, 22, 31, 32) als Antriebsmodul ausgebildet ist, wobei
jedes Antriebsmodul zwei Elektromotoren aufweist, mittels welchen
das mindestens ein Rad (41, 42, 43, 44) des Antriebsmoduls
um die in die Vertikalrichtung (Z) verlaufende Schwenkachse (61, 62, 63, 64) sowie
um die in die horizontale Richtung verlaufende Drehachse (51, 52, 53, 54) antreibbar ist.

6. Fahrwerk (10) nach einem der vorangegangenen Ansprüche,
**dadurch gekennzeichnet, dass**
in jedem Antriebsmodul
die Drehachse (51) und die Schwenkachse (61, 62, 63, 64) sich schneiden.

7. Fahrwerk (10) nach einem der vorangegangenen Ansprüche,
**dadurch gekennzeichnet, dass**
mindestens zwei der Radmodule (21, 22, 31, 32) als Stützmodule ausgebildet sind, wobei in jedem Stützmodul
die Drehachse (51, 52, 53, 54) und die Schwenkachse (61, 62, 63, 64) beabstandet zueinander verlaufen.

8. Fahrwerk (10) nach einem der vorangegangenen Ansprüche, **dadurch gekennzeichnet, dass** das Fahrwerk (10) genau vier Radmodule (21, 22, 31, 32) aufweist.

9. Fahrwerk (10) nach einem der vorangegangenen Ansprüche, **dadurch gekennzeichnet, dass** jedes der Radmodule (21, 22, 31, 32) jeweils genau ein Rad (41, 42, 43, 44) aufweist.

10. Mobiles Transportsystem, insbesondere zum Transport von Gegenständen in einer technischen Anlage, umfassend
ein Fahrwerk (10) nach einem der vorangegangenen Ansprüche.

11. Mobiles Transportsystem nach Anspruch 10, **dadurch gekennzeichnet, dass**
das mobile Transportsystem ein autonom fahrendes Fahrzeug ist und
einen elektrischen Energiespeicher, insbesondere eine aufladbare Batterie, zur Versorgung von Elektromotoren und weiteren Modulen umfasst.

12. Mobiles Transportsystem nach einem der Ansprüche 10 bis 11,
**dadurch gekennzeichnet, dass**
das mobile Transportsystem einen Übertragerkopf mit einer Wicklung, welche induktiv mit einem in einem Boden verlegten Primärleiter koppelbar ist, umfasst.

## Claims

1. A chassis (10) for a mobile transport system, comprising
a vehicle frame (12) and at least four wheel modules (21, 22, 31, 32) each of which has at least one wheel (41, 42, 43, 44), wherein
the mobile transport system (10) comprises a swinging rocker (14) which is pivotable relative to the vehicle frame (12) about a swing axis (13) running in a longitudinal direction (X), wherein
at least two of the wheel modules (21, 22, 31, 32) are attached to the vehicle frame (12), and the wheels (41, 42, 43, 44) of the aforementioned wheel modules (21, 22, 31, 32) are each pivotably mounted relative to the vehicle frame (12) about a pivot axis (61, 62, 63, 64) running in a vertical direction (Z) and rotatably mounted relative to the vehicle frame (12) about a rotational axis (51, 52, 53, 54) running in a horizontal direction, and
at least two of the wheel modules (21, 22, 31, 32) are attached to the swinging rocker (14), and the wheels (41, 42, 43, 44) of the aforementioned wheel modules (21, 22, 31, 32) are each pivotably mounted relative to the swinging rocker (14) about a pivot axis (61, 62, 63, 64) running in the vertical direction (Z) and rotatably mounted relative to the swinging rocker (14) about a rotational axis (51, 52, 53, 54) running in a horizontal direction,
**characterised in that**
the at least four wheel modules (21, 22, 31, 32) are in the form of drive modules, wherein each drive module has two electric motors by means of which the at least one wheel (41, 42, 43, 44) of the drive module is drivable about the pivot axis (61, 62, 63, 64) running in the vertical direction (Z) as well as about the rotational axis (51, 52, 53, 54) running in the horizontal direction, and **in that**
each drive module has a superimposition gear unit, wherein the two electric motors are designed to jointly, by means of the superimposition gear unit, drive the wheel (41, 42, 43, 44) about the rotational axis (51, 52, 53, 54) and drive the wheel (41, 42, 43, 44) about the pivot axis (61, 62, 63, 64).

2. A chassis (10) according to claim 1,
**characterised in that**
the wheels (41, 42, 43, 44) of the wheel modules (21, 22, 23, 24) attached to the vehicle frame (12) are arranged offset from one another in a transverse direction (Y), and/or **in that** the wheels (41, 42, 43, 44) of the wheel modules (21, 22, 31, 32) attached to the swinging rocker (14) are arranged offset from one another in a transverse direction (Y).

3. A chassis (10) according to any one of the preceding claims,
**characterised in that**
at least two of the wheel modules (21, 22, 31, 32) are in the form of drive modules, wherein each drive module has two electric motors by means of which the at least one wheel (41, 42, 43, 44) of the drive module is drivable about the pivot axis (61, 62, 63, 64) running in the vertical direction (Z) as well as about the rotational axis (51, 52, 53, 54) running in the horizontal direction.

4. A chassis (10) according to any one of the preceding claims,
**characterised in that**
at least one of the wheel modules (21, 22, 31, 32) attached to the vehicle frame (12) is in the form of a drive module, wherein each drive module has two electric motors by means of which the at least one wheel (41, 42, 43, 44) of the drive module is drivable about the pivot axis (61, 62, 63, 64) running in the vertical direction (Z) as well as about the rotational axis (51, 52, 53, 54) running in the horizontal direction.

5. A chassis (10) according to any one of the preceding claims,
**characterised in that**
at least one of the wheel modules (21, 22, 31, 32) attached to the swinging rocker (14) is in the form of a drive module, wherein
each drive module has two electric motors by means of which the at least one wheel (41, 42, 43, 44) of the drive module is drivable about the pivot axis (61, 62, 63, 64) running in the vertical direction (Z) and about the rotational axis (51, 52, 53, 54) running in the horizontal direction.

6. A chassis (10) according to any one of the preceding claims,
**characterised in that**
the rotational axis (51) and the pivot axis (61, 62, 63, 64) intersect in each drive module.

7. A chassis (10) according to any one of the preceding claims,
**characterised in that**
at least two of the wheel modules (21, 22, 31, 32) are in the form of support modules, wherein in each support module, the rotational axis (51, 52, 53, 54) and the pivot axis (61, 62, 63, 64) run at a distance from one another.

8. A chassis (10) according to any one of the preceding claims, **characterised in that** the chassis (10) has precisely four wheel modules (21, 22, 31, 32).

9. A chassis (10) according to any one of the preceding claims, **characterised in that** each of the wheel modules (21, 22, 31, 32) has in each case precisely one wheel (41, 42, 43, 44).

10. A mobile transport system, in particular for transporting objects in a technical system, comprising a chassis (10) according to any one of the preceding claims.

11. A mobile transport system according to claim 10, **characterised in that** the mobile transport system is an autonomously driving vehicle and comprises an electrical energy store, in particular a rechargeable battery, to supply electric motors and further modules.

12. A mobile transport system according to one of claims 10 to 11,
**characterised in that**
the mobile transport system comprises a transfer head with a winding which can be inductively coupled with a primary conductor laid in the ground.

## Revendications

1. Train de roulement (10) dévolu à un système mobile de transport, comprenant
un châssis (12) de véhicule et
au moins quatre modules (21, 22, 31, 32) de roues
munis, à chaque fois, d'au moins une roue (41, 42, 43, 44),
ledit système mobile de transport (10)
incluant une flèche oscillante pendulaire (14) apte à pivoter, par rapport au châssis (12) du véhicule, autour d'un axe (13) d'oscillation pendulaire s'étendant dans une direction longitudinale (X), sachant
qu'au moins deux modules, au sein des modules (21, 22, 31, 32) de roues,
sont implantés sur ledit châssis (12) du véhicule et que
les roues (41, 42, 43, 44) desdits modules (21, 22, 31, 32)
sont aptes à pivoter à chaque fois, par rapport audit châssis (12) du véhicule, autour d'un axe de pivotement (61, 62, 63, 64) s'étendant dans une direction verticale (Z) et
sont montées à rotation, par rapport audit châssis (12) du véhicule, autour d'un axe de rotation (51, 52, 53, 54) s'étendant dans une direction horizontale, et
qu'au moins deux modules, au sein des modules (21, 22, 31, 32) de roues,
sont implantés sur la flèche oscillante pendulaire (14) et que
les roues (41, 42, 43, 44) desdits modules (21, 22, 31, 32)
sont aptes à pivoter à chaque fois, par rapport à ladite flèche oscillante pendulaire (14), autour d'un axe de pivotement (61, 62, 63, 64) s'étendant dans la direction verticale (Z) et
sont montées à rotation, par rapport à ladite flèche oscillante pendulaire (14), autour d'un axe de rotation (51, 52, 53, 54) s'étendant dans une direction horizontale,
**caractérisé par le fait que**
les modules (21, 22, 31, 32) de roues, au nombre minimal de quatre, sont conçus en tant que modules d'entraînement, étant précisé que
chaque module d'entraînement est muni de deux moteurs électriques au moyen desquels la roue (41, 42, 43, 44), à présence minimale dans ledit module d'entraînement,
peut être entraînée autour de l'axe de pivotement (61, 62, 63, 64) s'étendant dans la direction verticale (Z), ainsi qu'autour de l'axe de rotation (51, 52, 53, 54) s'étendant dans la direction horizontale ; et **par le fait que**
chaque module d'entraînement est pourvu d'un engrenage de superposition,
les deux moteurs électriques étant alors conçus
pour entraîner la roue (41, 42, 43, 44) autour de l'axe de rotation (51, 52, 53, 54) et
pour entraîner ladite roue (41, 42, 43, 44) autour de l'axe de pivotement (61, 62, 63, 64) en mode conjoint, au moyen dudit engrenage de superposition.

2. Train de roulement (10) selon la revendication 1,
**caractérisé par le fait que**
les roues (41, 42, 43, 44) des modules (21, 22, 31, 32) implantés sur le châssis (12) du véhicule sont agencées avec décalage mutuel dans une direction transversale (Y) ; et/ou **par le fait que** les roues (41, 42, 43, 44) des modules (21, 22, 31, 32) implantés sur la flèche oscillante pendulaire (14) sont agencées avec décalage mutuel dans une direction transversale (Y).

3. Train de roulement (10) selon l'une des revendications précédentes,
**caractérisé par le fait**
**qu'**au moins deux modules, au sein des modules (21, 22, 31, 32) de roues, sont conçus en tant que modules d'entraînement, étant précisé que
chaque module d'entraînement est doté de deux moteurs électriques au moyen desquels la roue (41, 42, 43, 44), à présence minimale dans ledit module d'entraînement,
peut être entraînée autour de l'axe de pivotement (61, 62, 63, 64) s'étendant dans la direction verticale (Z), ainsi qu'autour de l'axe de rotation (51, 52, 53, 54) s'étendant dans la direction horizontale.

4. Train de roulement (10) selon l'une des revendications précédentes,
**caractérisé par le fait**
**qu'**au moins l'un des modules (21, 22, 31, 32) de roues implantés sur le châssis (12) du véhicule est conçu en tant que module d'entraînement, étant précisé que
chaque module d'entraînement est pourvu de deux moteurs électriques au moyen desquels la roue (41, 42, 43, 44), à présence minimale dans ledit module d'entraînement,
peut être entraînée autour de l'axe de pivotement (61, 62, 63, 64) s'étendant dans la direction verticale (Z), ainsi qu'autour de l'axe de rotation (51, 52, 53, 54) s'étendant dans la direction horizontale.

5. Train de roulement (10) selon l'une des revendications précédentes,
**caractérisé par le fait**
**qu'**au moins l'un des modules (21, 22, 31, 32) de roues implantés sur la flèche oscillante pendulaire (14) est conçu en tant que module d'entraînement, étant précisé que
chaque module d'entraînement est nanti de deux moteurs électriques au moyen desquels la roue (41, 42, 43, 44), à présence minimale dans ledit module d'entraînement,
peut être entraînée autour de l'axe de pivotement (61, 62, 63, 64) s'étendant dans la direction verticale (Z), ainsi qu'autour de l'axe de rotation (51, 52, 53, 54) s'étendant dans la direction horizontale.

6. Train de roulement (10) selon l'une des revendications précédentes,
**caractérisé par le fait que**
l'axe de rotation (51) et l'axe de pivotement (61, 62, 63, 64) se coupent mutuellement dans chaque module d'entraînement.

7. Train de roulement (10) selon l'une des revendications précédentes,
**caractérisé par le fait**
**qu'**au moins deux modules, au sein des modules (21, 22, 31, 32) de roues, sont conçus en tant que modules d'appui, sachant que
l'axe de rotation (51, 52, 53, 54) et l'axe de pivotement (61, 62, 63, 64) s'étendent à distance l'un de l'autre
dans chaque module d'appui.

8. Train de roulement (10) selon l'une des revendications précédentes,
**caractérisé par le fait que**
ledit train de roulement (10) compte exactement quatre modules (21, 22, 31, 32) de roues.

9. Train de roulement (10) selon l'une des revendications précédentes,
**caractérisé par le fait que**
chacun des modules (21, 22, 31, 32) de roues est muni d'exactement une roue (41, 42, 43, 44) à chaque fois.

10. Système mobile de transport notamment affecté au transport d'objets dans une installation technique, incluant
un train de roulement (10) conforme à l'une des revendications précédentes.

11. Système mobile de transport selon la revendication 10,
**caractérisé par le fait que**
ledit système mobile de transport est un véhicule à déplacement autonome et
inclut un accumulateur d'énergie électrique, en particulier une batterie rechargeable, en vue de l'alimentation de moteurs électriques et d'autres modules.

12. Système mobile de transport selon l'une des revendications 10 à 11,
**caractérisé par le fait que**
ledit système mobile de transport inclut une tête de transmission associée à un enroulement pouvant être couplé, par induction, à un conducteur primaire intégré dans un sol.
